Europäisches Patentamt

**European Patent Office**

**Office européen des brevets**

(11) Numéro de publication: **0 277 847 B1**

(12) **FASCICULE DE BREVET EUROPEEN**

(45) Date de publication de fascicule du brevet: **26.08.92** (51) Int. Cl.⁵: **F25D 3/00**, F28D 20/00

(21) Numéro de dépôt: **88400021.7**

(22) Date de dépôt: **06.01.88**

(54) **Corps de remplissage destiné à recevoir un agent de stockage d'énergie à forte chaleur latente de fusion-cristallisation.**

(30) Priorité: **13.01.87 FR 8700270**

(43) Date de publication de la demande:
**10.08.88 Bulletin 88/32**

(45) Mention de la délivrance du brevet:
**26.08.92 Bulletin 92/35**

(84) Etats contractants désignés:
**AT BE CH DE ES GB GR IT LI LU NL SE**

(56) Documents cités:
EP-A- 0 118 720     DE-A- 2 552 698
DE-A- 3 005 450     DE-A- 3 102 729
DE-A- 3 139 863     FR-A- 2 375 568
US-A- 2 525 261

(73) Titulaire: **Patry, Jean
9, rue Saint-Paul
F-75004 Paris(FR)**

(72) Inventeur: **Patry, Jean
9, rue Saint-Paul
F-75004 Paris(FR)**

(74) Mandataire: **Madeuf, René Louis et al
Cabinet Madeuf, Conseils en Propriété Industrielle, 3, Avenue Bugeaud
F-75116 Paris(FR)**

Rank Xerox (UK) Business Services

## Description

La présente invention est relative à un corps de remplissage, tel que décrit dans le préambule de la revendication 1. Un tel corps est connu par le DE-A-30 05 450.

On connaît également des installations qui nécessitent la mise en place d'une production de calories ou de frigories en quantités variables pendant une période donnée, ces installations étant conçues de manière à réduire, dans des proportions très importantes, la puissance des appareils destinés à produire les calories et/ou les frigories. Un exemple d'une telle installation est décrit, en particulier, dans le FR-A-2 469 678.

Dans de telles installations, on met en oeuvre des systèmes de stockage des calories et/ou des frigories produites, celles-ci étant redistribuées en fonction des besoins, la capacité de stockage étant choisie de manière que l'installation puisse fournir instantanément la puissance maximale exigée par les charges de l'installation.

On connaît, en outre, de nombreux corps de remplissage pour installations destinées à stocker de l'énergie calorifique ou frigorifique, ces corps de remplissage contenant un matériau à changement de phase.

Après avoir étudié avec soin les documents antérieurs se rapportant à l'état de la technique indiquée ci-dessus, on peut en déduire qu'il existe trois types de corps de remplissage du matériau à changement de phase, à savoir :

a) un corps de remplissage de préférence totalement rempli de l'agent de stockage et possédant une structure flexible pour absorber les variations de volume consécutives au changement de volume de l'agent de stockage lors de son changement de phase.

Un tel exemple est, par exemple, décrit dans le US - A -2 525 261.

b) un corps de remplissage de préférence totalement rempli de l'agent de stockage et possédant une structure élastique pour absorber les variations de volume consécutives au changement de volume de l'agent de stockage lors de son changement de phase.

Un exemple d'un tel corps de remplissage est exposé, par exemple, dans le FR - A - 1 104 400.

c) un corps de remplissage partiellement rempli de l'agent de stockage et possédant généralement une structure rigide ; c'est l'espace libre de gaz ou d'air qui dans ce cas est chargé, par compression, d'absorber l'accroissement du volume consécutif au changement de volume de l'agent de stockage lors de son changement de phase.

On trouve une description de ce corps de remplissage, par exemple, dans le US - A - 4 205 656.

Il s'agit dans tous ces cas d'encapsuler un matériau à changement de phase (eau, hydrate salin, paraffine, etc.) dans une enveloppe pour stocker la chaleur ou du froid par exploitation de la chaleur latente de fusion.

De par ses qualités de symétrie, la forme sphérique de l'enveloppe devant contenir le matériau à changement de phase est de loin la plus répandue.

De plus, la mise en vrac de ces capsules sphériques dans une cuve présente une mise en oeuvre simple, un bon coefficient de remplissage de la cuve et une bonne circulation du produit caloporteur qui doit effectuer le transfert de chaleur.

Les qualités thermiques de ce type de stockage se mesurent par la puissance d'échange entre le matériau à changement de phase et le caloporteur dans lequel baigne la capsule.

Pour un matériau à changement de phase donné et un écart de température entre le matériau à changement de phase et le caloporteur donné, la puissance d'échange est :

- proportionnelle à la conductibilité thermique $\lambda$ des matériaux en présence.
- inversement proportionnelle à l'épaisseur $\underline{e}$ des corps ou matériaux à traverser
- proportionnelle à la surface d'échange $\underline{S}$ entre le matériau à changement de phase et le caloporteur

$$P = f (\lambda , \tfrac{1}{\underline{e}} , S)$$

L'objectif technico-économique visé consiste alors à rechercher le meilleur compromis $(\lambda , \tfrac{1}{\underline{e}} , S)$ au meilleur coût.

Certaines solutions connues ont porté sur la conductibilité thermique des matériaux employés pour la réalisation de la sphère mais, si l'acier a une bonne conductibilité thermique, son coût est élevé ; lorsque l'on emploie une matière plastique, la conductibilité thermique est faible et le prix de revient l'est également ; et, lorsqu'on utilise un compromis constitué de matière plastique incorporant des particules métalliques, on obtient une conductibilité thermique moyenne à un prix de revient plus élevé.

D'autres solutions ont consisté à réaliser des enveloppes contenant des inscrits en creux sur tout ou partie de la sphère afin de réduire l'épaisseur $\underline{e}$ à traverser pour augmenter la vitesse de cristallisation du matériau à changement de phase.

Mais là encore on s'est heurté à des difficultés car le fond des inscrits en se déformant s'étire et s'amincit et provoque des zones de rupture et une détérioration des enveloppes.

Il existe également des sphères à poches d'air afin d'absorber la dilatation du matériau à changement de phase sans éclatement de l'enveloppe mais là encore le rendement est moindre du fait de la poche d'air et de l'épaisseur plus grande de l'enveloppe qui soit être rigide.

Aucune des solutions antérieures n'a donc donné satisfaction.

C'est pourquoi, la présente invention tend à définir un corps de remplissage de préférence totalement rempli de l'agent de stockage et présentant une structure mince et flexible pour absorber les variations de volume consécutives au changement de volume de l'agent de stockage lors de son changement de phase.

En conséquence, la présente invention propose un corps de remplissage à structure flexible dont la forme géométrique est telle que sa seule flexibilité est requise pour en augmenter le volume.

On comprend que ceci est essentiel et déterminant pour obtenir une réalisation de qualité, en particulier lorsque l'enveloppe est réalisée en matière plastique. On sait en effet que, lorsque la matière plastique est soumise à l'étirement, les chaînes moléculaires les constituant s'écartent d'autant et permettent alors le transfert par osmose ou par différence de concentration. On sait aussi que le module d'élasticité des matières plastiques est faible et qu'un accroissement de pression interne au corps de remplissage résultant d'un accroissement de volume de l'agent de stockage peut se traduire par un dépassement des limites d'élasticité de la matière constituant l'enveloppe de préférence dans sa partie la moins résistante, ce qui aurait pour conséquence une rapide détérioration de l'enveloppe.

Conformément à l'invention, le corps de remplissage destiné à recevoir un agent de stockage d'énergie à forte chaleur latente de fusion-cristallisation, notamment de l'eau, pour une installation de stockage comprenant une enceinte dans laquelle sont empilés lesdits corps de remplissage, l'enveloppe de chacun de ces corps de remplissage étant totalement remplie de l'agent de stockage et possédant une structure flexible, est caractérisé par les éléments décrits dans la partie caractérisante de la revendication 1.

Une forme de réalisation de l'objet de l'invention est représentée aux dessins annexés.

La fig. 1 est une coupe diamétrale du corps de remplissage contenant le matériau à changement de phase.

La fig. 2 est une vue extérieure du corps de remplissage mais décalée de 90° par rapport à la fig. 1.

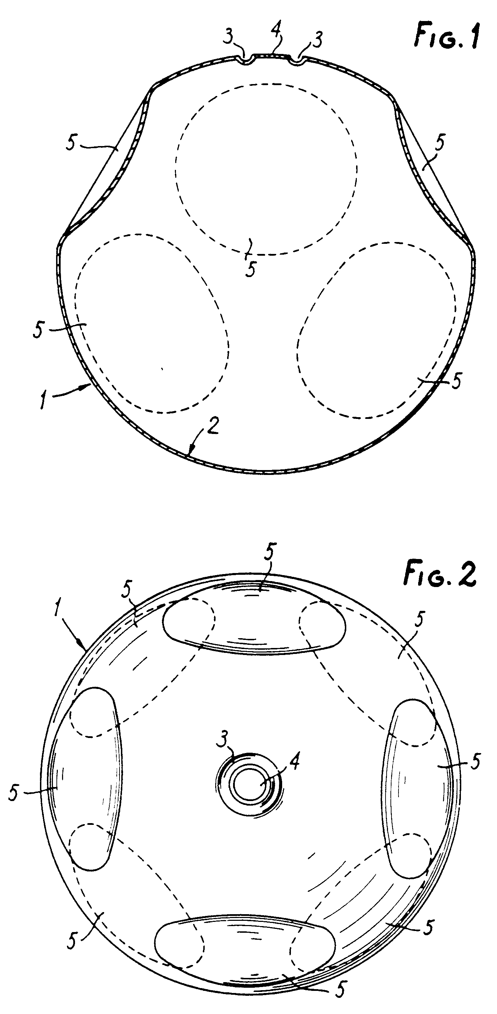

A la fig. 1, on a représenté un corps ou enveloppe 1 de forme sensiblement sphérique à parois minces 2 d'épaisseur constante présentant dans sa zone périphérique une valve circulaire 3 fermée hermétiquement, après remplissage par le matériau à changement de phase, par un capuchon 4.

De plus, le corps 1 présente des évidements 5 qui sont des calottes sphériques circulaires inversées dont le rayon de courbure concave est égal au rayon de courbure convexe de la paroi de la sphère formant le corps 1. En général, il est prévu huit évidements 5 sur l'extérieur de la sphère constituant le corps 1, ces évidements 5 étant disposés à 120° ou à 90° les uns par rapport aux autres dans le plan horizontal passant par le centre de la sphère et décalés de 45° les uns par rapport aux autres dans le plan vertical passant par le centre de la sphère.

Le volume inscrit en creux par ces évidements par rapport au volume de la sphère parfaite est au moins égal à l'accroissement de volume de l'agent de stockage lors de son changement de phase.

Ainsi, lorsque l'agent de stockage change d'état, l'accroissement de pression interne consécutif à ce changement a pour effet de pousser sur les évidements ou calottes sphériques 5 qui progressivement se retournent en libérant le volume d'expansion nécessaire.

On voit bien dans cet exemple de réalisation que c'est la seule flexibilité de la paroi qui est exploitée pour obtenir un accroissement de volume et que la matière constituant l'enveloppe n'est jamais ni étirée, ni contrainte.

L'augmentation du nombre des calottes sphériques inscrites en creux sur le corps de la sphère a pour effet :

a) de réduire d'autant l'amplitude de la flexion requise ;

b) de mieux répartir l'accroissement de volume sur le surface de l'enveloppe.

Ainsi, la réalisation sera d'une qualité d'autant plus grande que le nombre des calottes sera important.

Comme il a déjà été indiqué ci-dessus, l'agent de stockage des calories ou des frigories peut être de l'eau, un hydrate salin, de la paraffine, etc. qui est introduit à l'état liquide dans le corps sphérique 1. Dés que le remplissage est terminé, on met en place le capuchon 4 fermant d'une manière étanche le corps sphérique.

## Revendications

1. Corps de remplissage destiné à recevoir un agent de stockage d'énergie à forte chaleur latente de fusion-cristallisation, notamment de l'eau, pour une installation de stockage comprenant une enceinte dans laquelle sont empilés lesdits corps de remplissage, l'enveloppe de chacun de ces corps de remplissage étant totalement remplie de l'agent de stockage et possédant une enveloppe flexible, caractérisé en ce que l'enveloppe est strictement flexible et comporte, lorsque l'agent de stockage est en phase liquide, un ou plusieurs évidements circulaires sphériques inscrits en creux et de forme convexe de sorte qu'un accroissement de pression à l'intérieur du corps consécutif à une élévation de volume correspondant lui-même à un changement de phase de l'agent de stockage provoque une inversion des évidements circulaires qui deviennent de forme concave pour libérer un volume d'expansion complémentaire nécessaire au changement de phase sans étirement de la matière constituant l'enveloppe.

2. Corps de remplissage suivant la revendication 1, caractérisé en ce que l'enveloppe est de forme sphérique, les évidements circulaires sphériques présentant un rayon de courbure égale au rayon de courbure de la sphère mais inversé, le volume inscrit par ces évidements par rapport à la sphère parfaite étant au moins égal au volume nécessaire à l'accroissement de volume de l'agent de stockage lorsqu'il change de phase, de façon à présenter la forme d'une sphère presque parfaite lorsque l'agent de stockage est totalement cristallisé.

## Claims

1. Storage body designed to receive an energy-accumulating medium with high fusion-crystallisation latent heat, typically water, for an accumulating installation comprising an enclosure in which are stocked said storage bodies, the shell of each of these storage bodies being totally filled with the accumulation medium and having a flexible structure, characterized in that the shell is strictly flexible and comprises, when the accumulation medium is under a liquid phase, one or several spherical circular hollows which are recessingly inscribed and have a convex shape so that an increase of pressure within the body following an increase of volume corresponding itself to a change of phase of the accumulation medium causes an inversion of the circular hollows which become of a concave shape for freeing a complementary expansion volume necessary to the change of phase without streching the material forming the shell.

2. Storage body according to claim 1, characterized in that the shell has a spherical shape, the circular spherical hollows having a radius of curvature equal to the radius of curvature of the sphere, but inverted, the volume inscribed by these hollows with respect to the perfect sphere being at least equal to the volume necessary for the volume increase of the accumulation medium when the same changes of phase, in order to exhibit the shape of a nearly perfect sphere when the accumulation medium is completely crystallized.

## Patentansprüche

1. Füllkörper zur Aufnahme eines Energiespeicheragens mit hohner, latenter Schmelz-Kristallisierungswärme, insbesondere Wasser, für eine Speichereinrichtung, umfassend einen Behälter, in welchem die besagten Füllkörper aufgeschichtet sind, wobei die Hülle jedes der Füllkörper zur Gänze mit dem Speichermaterial ausgefüllt ist und eine flexible Hülle besitzt, dadurch gekennzeichnet, daß die Hülle streng flexibel ist und eine oder mehrere kreisförmig-sphärische Ausnehmungen einbuchtungsmässig gelagert und von konvexer Form aufweist, wenn sich das Speichermaterial in der flüssigen Phase befindet, sodaß ein Anwachsen des Druckes im Inneren des Körpers nach einer Anhebung des Volumens, die ihrerseits einem Phasenübergang des Speichermaterials entspricht, eine Umkehrung der kreisförmigen Ausnehmungen hervorruft, die eine konkave Form annehmen, um ohne Dehnung des die Hülle bildenden Materials ein zusätzliches Ausdehnungsvolumen freizugeben, welches beim Phasenübergang notwendig ist.

2. Füllkörper nach Anspruch 1, dadurch gekennzeichnet, daß die Hülle von sphärischer Form ist, die kreisförmig-sphärischer Ausnehmungen einen Krümmungsradius mit gleichem Wert wie die Kugel jedoch mit umgekehrter Richtung aufweisen, das durch die Ausnehmungen definierte Volumen in bezug auf jenes der kompletten Kugel zumindest gleich dem beim Anwachsen des Volumens des Speichermaterials während des Phasenüberganges nötigen Volumen ist, sodaß bei vollständig auskristallisiertem Speichermaterial eine im wesentlichen komplette Kugel gegeben ist.

Fig.1

Fig.2